# EUROPEAN PATENT APPLICATION

(11) **EP 1 045 549 A1**
(43) Date of publication of application: **18.10.2000**
(21) Application number: 99480023.3
(22) Date of filing: 15.04.1999
(51) Int. Cl.: H04L 12/24, H04L 12/26, H04L 12/58

(54) **System and method for non intrusive monitoring and management of distributed data networks**

(71) Applicant: INTERNATIONAL BUSINESS MACHINES CORPORATION, Armonk, NY 10504 (US)
(72) Inventor: Devos, Jean-Claude, 34980 Saint Clément de Rivière (FR)
(74) Representative: Etorre, Yves Nicolas

(57) **Abstract**

A centralized supervisory center capable of administrating a plurality of independent client networks each comprising at least one server capable of sending mail messages through a common communications network to which the centralized supervisory center and the client networks have access, is described. The system rests on the assumption that the servers of the client networks are capable of collecting, over a fixed period of time, performance data indicative of the operational behavior of the client networks and to forward them under the form of mail messages to the supervisory center. Performance data are processed and displayed over the supervisory center monitoring stations and can be accessed from the common communications network as well. The invention allows the administration of independent remote client networks to take place from a central supervisory unit not located within the networks themselves so as they can easily be kept safe from any unwanted external intrusion preventing private client data from being unwillingly accessed from outside thanks to a one-way monitoring of the network i.e., only from network scheduled or unscheduled self generated messages.

## Description

### Field of the Invention

The present invention generally relates to a centralized supervisory system, and more particularly to a supervisory system for administrating distributed independent data networks.

### Background of the Invention

In a complete departure from the time where enterprise computing resources were centralized in a single or a bunch of tightly coupled huge powerful computers, generally located in a the same place and accessed from dumb terminals, computing facilities are nowadays largely distributed over a network of individual work stations or personal computers and servers, generally running on various operating systems while having to communicate with each other in order to cooperate. While having obvious advantages the new architecture has created its own set of specific problems especially, in the administration of a fleet of disparate terminal equipments, each having its own processing capability. Thus, in an attempt to effectively carry out the administration and maintenance of remote equipment, organized as a network however, with all the pieces not necessarily located on the same site, different centralized supervisory systems have been deployed by enterprises.

A conventional centralized supervisory system has a hierarchical structure in which a central supervisory device, located at the nucleus of the system gathers performance data and trouble reports by polling all the pieces of equipment forming the network. Thus, upon request from the central supervisory device, interrogating in turn each individual piece, performance data, alarms or trouble reports are gathered. As a matter of fact, for large networks, the hierarchy may be comprised of several layers of supervisory devices each gathering information from the lower situated supervisory devices in the hierarchy of such devices. With this approach the top supervisory device has a complete view of the network thus, is able to detect all sorts of troubles and alarms, may establish statistics regarding the network operation and performance and, generally speaking, is capable of collecting enough data and displaying them in a convenient way so that the attendant in charge, or the piece of software automatically managing the network, or the combination of, are provided with enough pertinent information to take any appropriate action, if any is required thus, always keeping the network running at its optimal level of performance in an attempt to fulfill the generally high level of expectation from the end user on the trouble-free running of the network he is connected to.

Although the above objective is generally fairly easily achievable in small or medium-size networks, increasing the number of pieces of equipment in larger networks triggers a dramatic increase of the exchange of performance data and corresponding polling requests which may interfere not only with the normal flow of user data but also with the alarms and the report of detected troubles that should normally not suffer any delay before they are conveyed to the central supervisory unit.

This latter aspect is, for example, the object of the US patent 5,638,514 delivered on June 10, 1997 which teaches how it is possible, in a hierarchy of central and regional supervisory devices, to decrease the time for which the lines interconnecting the pieces of equipment are busy transmitting performance data through various means especially, including status tables in the supervisory units, having state data keeping track of those of the pieces of equipment from which performance data need not to be collected and transmitted at some point of time.

Although this helps reducing the traffic the whole scheme, consisting in managing a complete enterprise network, implicitly rests firstly on the assumption that a permanent duplex medium is available from transferring, both ways, requests and administrative information such as the performance reports and secondly assumes that the centralized supervisory unit is indeed at the heart of the network. On these grounds, some commercially available products do exist which allow to manage and control an entire network from a single point of administration. As an example, Novell, Inc. a US company, with headquarters in Provo, Utah and a worldwide representation is a well-known player in this arena, selling software products aimed at managing heterogeneous networks based on the industry SNMP standard (Simple Network Management Protocol).

However, the assumptions that the centralized supervisory unit may actually be located within the network itself and enjoys a full duplex access to the network resources may not hold thus, preventing from being able to use commercially available standard solutions as mentioned above. Actually, because of the relentless quest for decreasing the total cost of ownership of a computing and communication network, and in order to reduce their functional expenses, some companies rather than running their own network which assumes the hiring of a full-time professional team, are subcontracting the network administration and maintenance to a third-party external management service provider. In which case the end supervisory unit cannot even conveniently be a part of the company network, mainly for security reasons, so as company's private information is kept confidential and cannot leak outside of the network. In which case the company's network is sitting behind a firewall and polling is just no longer possible or authorized so as to prevent hacker intrusions.

Moreover, when a company is outsourcing its network management to a service provider it is very likely that the external service provider has several, sometimes many, remote clients it would prefer, in order to reduce in turn expenses, to administrate from the same central office, from the same consoles, while keeping each of its client perfectly isolated and unaware of each other for obvious ethic, security and commercial reasons.

Thus, it is a broad object of the invention to allow the administration of a remote client network to be accomplished from a central supervisory unit not necessarily located within the network itself.

It is a further object of the invention to allow keeping client network safe from any unwanted external intrusion so as to prevent private client data from being unwillingly accessed from outside.

It is a further object of the invention to permit the administration to be carried out through a one-way monitoring of the network i.e., only from network scheduled or unscheduled self generated messages.

It is another object of the invention to permit that several independent networks be manageable from the same central unit while being kept isolated and unaware of each other.

It is still another object of the invention to permit that the above be accomplished without requiring a permanent connection with the client networks.

### Summary of the Invention

A method and system for gathering performance data in a centralized supervisory center comprising storing, computing and communicating resources, from a plurality of independent client networks each comprising at least one server capable of sending mail messages through a common communications network on which the centralized supervisory center and the client networks are connected, are disclosed. The method assumes that the servers of the client networks are capable of collecting, over a fixed period of time, performance data indicative of the operational behavior of the client networks and to preprocess them. Then, at completion of each fixed period of time, the preprocessed performance data are formatted under the form of a common format report understandable by the supervisory center and forwarded to it, in one or more mail messages, through the common communications network. Upon reception into the supervisory center they are stored while the above steps repeat till supervisory center and at least one of the client networks are operational. Data gathered from the independent client networks are then further processed. Performance data are extracted while those of the client networks failing to send the common format reports are flagged. Data bases are created, including a repository data base of all regular performance data and a data base of all incidents and outstanding events reported from said client networks also, logging those of the client networks that fail sending reports in due time. Hence, data base content are analyzed and various views of the data collected displayed so as the operation of the client networks can be closely watched from a monitoring station or from a remote station either within the supervisory center or connected to the common communications network.

The method of the invention allows the administration of a remote client network to take place from a central supervisory unit not necessarily located within the client network itself so as it can easily be kept safe from any unwanted external intrusion preventing private client data from being unwillingly accessed from outside thanks to a one-way monitoring of the network i.e., only from network scheduled or unscheduled self generated messages. The method also permits that several independent networks be manageable from the same central unit while they are kept isolated and unaware of each other. Furthermore, the invention does not require that a permanent connection exists with the client networks provided communications can be established at regular intervals.

### Brief Description of the Drawings

- **Figure 1**: is a conceptual view of independent data networks administrated from a supervisory center.
- **Figure 2**: illustrates in more details the principles on which the centralized supervisory system is built.
- **Figure 3**: shows how client server is organized.
- **Figure 4**: gives more details on the way monitoring station and supervisory center are organized.
- **Figure 5**: is an example of one possible view of the data collected by the supervisory center from the client networks.
- **Figure 6**: is an overview of the monitor algorithm.

### Detailed Description of the Preferred Embodiment

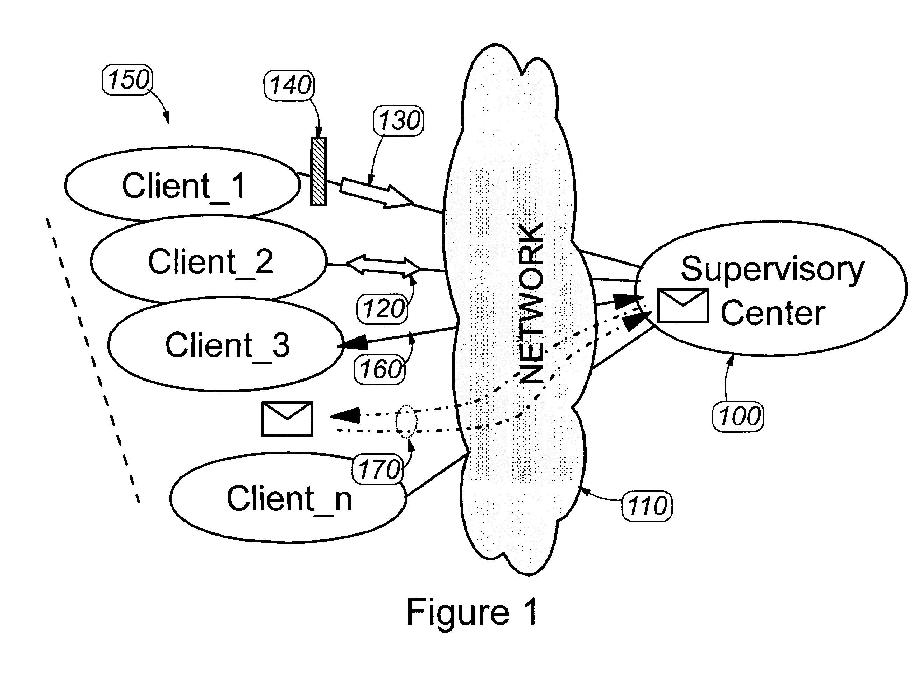

**Figure 1** illustrates the general concept of the invention where several independent client networks like [150] are monitored and administrated from a common supervisory center [100] through a communications network [110]. The latter being likely the global Internet or an intranet or even more likely a combination of. In all cases the assumption is made that the supervisory center [100] need not to be part of any of the client network provided it can communicate with each of them. Each of the client network is assumed to be a company, organization, institution or alike private network allowing the individuals belonging to these organizations to communicate and carry out their job over their own distributed data network. Keeping such a network running at a satisfactory level of performance and generally speaking administrating it require specialized skilled personnel very often not at all in the domain of activity of the organization itself. Therefore, many are not willing to take care of this and prefer to subcontract it to a third specialized party thus, outsourcing their network management, in an attempt to reduce the cost of ownership of such a network. However, they want at the same time to prevent any intrusion from outside for the obvious reason that, most of the time, the information must stay confidential and, even more importantly, malicious intrusion avoided that could put in jeopardy the network computing resources. Then, the hypothetical case like [120] where a client would authorize anybody to access its network, so that polling of all the network resources would be possible from outside is, in practice, never observed. On contrary, such private network are equipped with a "firewall" like [140] which, if it does not generally put constraints on the outbound traffic [130], is a barrier to any direct access within the client network forbidding the polling of its computing resources and private data bases. Also, a permanent full duplex communication line such as [160] may not just exist. If client_3 has no need to be permanently connected to the rest of the world, due to the nature of its activity, it may decide to reduce functional expenses by just connecting when needed or at scheduled intervals through a switched line instead. As a consequence, the scheme where a third specialized party [100] is going to monitor and manage independent private networks from an outside supervisory center and be authorized to freely access client networks and enjoy the luxury of a permanent duplex connection is not a realistic assumption. However, what is reasonable to assume is that at least an electronic mailing system exists over the private network so that individuals within the organization may communicate between them and also with outside world even though this may not be through a permanent line. Then, mail [170] may possibly be issued by any of the machines implementing a private network towards the supervisory center and received from it as well, through the network [110], without having to assume that a permanent connection exists nor that polling is required to monitor the client private networks. Finally, it does not matter if the client network is simple or complex the scheme only requires that a gateway for communicating with it, from the supervisory center, exists.

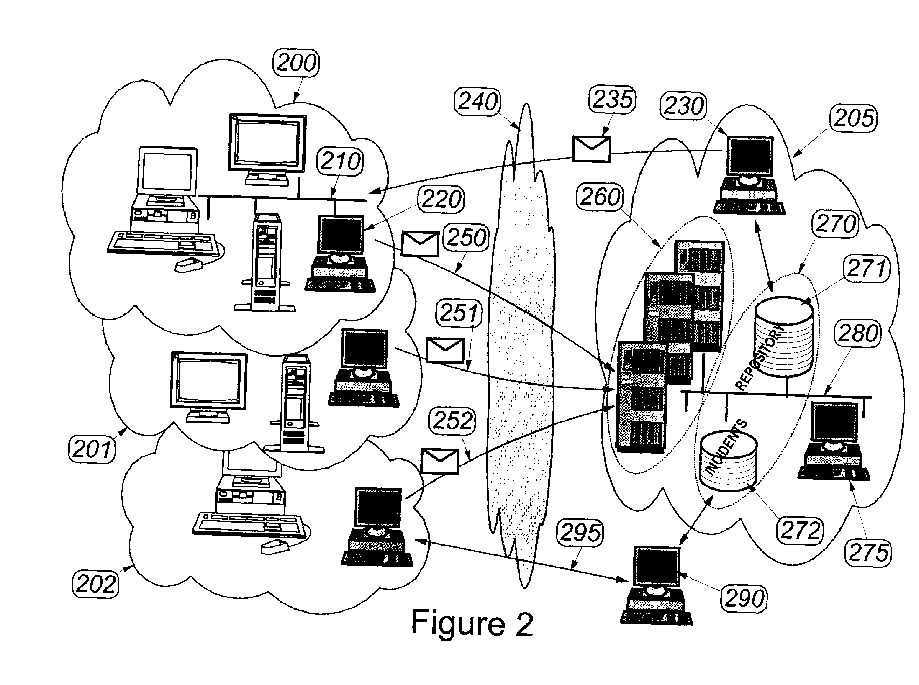

**Figure 2** illustrates in more details the principles on which the centralized supervisory system is built. It is assumed that each of the client network like [200] is made of pieces of equipment such as personal computers and individual work stations however all interconnected, for example through a LAN (Local Area Network) [210], so they can communicate and cooperate to carry out together what the organization is intended to achieve. In this network there is at least one server [220] in charge of running a groupware type of software so that the individuals within the organization can indeed perform a team work exchanging mail and documents, accessing information from databases or storing it. Also, they need to access the external world, let's say, the Internet. All of this and more can be performed from software devised for group of peoples working together such as Lotus Notes a product by Lotus Development Corporation, a US company with headquarters 55 Cambridge Parkway, Cambridge, Massachusetts 02142, the USA and a worldwide presence. With such a product the client network server [220] can then be instructed and configured to collect and send statistics and reports, on a regular basis, to the supervisory center [205] under the form of mail messages [250] through a network [240] which can be public e.g. the Internet, or an intranet or, more likely, a combination of. On contrary of the regular statistic reports, alarms, incidents and outstanding events should be conveyed to the supervisory center at the time they occur if a connection is permanently established or can be set on request so as the supervisory center is made aware and can take the appropriate actions. All the mail messages [250], [251] and [252] from all the client networks, limited to three clients [200], [201] and [202] in the particular example of figure 2, are reaching the supervisory center server or group of servers [260] where they are processed. It is likely, as illustrated in figure 2, that the supervisory center comprises in fact several servers for performance reasons if the supervisory center must manage many client networks and, this is an even much more important item, to contribute to reach a very high level of reliability so that the supervisory center is able to guarantee a continuous service to its clients. Also, the servers have access to significant storage facilities [270] in which the various data bases built to reflect the activity of all the client networks are stored. Again, to reach the high level of availability the clients are expecting from an outside supervisory center replication of data bases is likely to be carried out over the various storage facilities and servers accessing them. Regardless of the actual implementation two broad categories of data bases are going to be managed. Firstly, a repository [271] type of data base logging, after processing, all the regular mail messages [250], [251] and [252] received from the client networks at scheduled intervals, secondly, another one more specifically aimed at logging the outstanding, unscheduled, events such as the alarms and incidents [272]. The information thus collected, processed and stored is conveniently displayed on at least one monitoring station [275], interconnected with all the here above servers and storage devices over a common network [280] so that operators can follow the activity on the client networks and are informed of alarms and incidents. It is important noting here that an absence of reporting from a client network, at a scheduled interval, is logged too. This will eventually generate an alarm if the rules set by the supervisory center and agreed by the client, on the reporting conditions, are violated.

Although network [280] is symbolized here under the form of an Ethernet local area network nothing prevent from considering any other type of network be it local or wide area network. Especially, a product like Lotus Notes, already mentioned, allow to access local and remote data bases and servers and does not necessarily assume that the pieces of equipment necessary to implement a supervisory center need all to be in physical close proximity thus, enabling the possibility of building very reliable supervisory centers. Therefore, a supervisory center like [205] may just be, if convenient, a virtual center with storing and computing facilities geographically dispersed. However, it can be as well, in part or in totality, located in the same locked room with a control access policy so as to better protect clients information.

The same remark, which does not require that all the pieces forming the supervisory center need to be in the same place, allows to have a specific remote monitor-like type of console [290] that can be located in its own separate secure place if necessary with however still the possibility of accessing the data bases of the supervisory center so as to take all the appropriate actions for a given client [202], or a bunch of clients, may be requiring their own set of private services and possibly with privileges for accessing their respective networks from outside [295] after permission is granted by the respective network managers.

In short the supervisory center is a network by itself so that the information collected and formatted in the monitoring station [275] is view able from the other stations on the network or even, if authorized, from a remote browser, through Internet, e.g., by a client who wants to consult its own performance data.

Finally, another type of longer term monitoring is achievable from a dedicated monitor machine [230] which, from the same data bases [270], can issue daily, weekly, monthly etc. .. type of (dashboard) reports. They synthesize over the corresponding time period the behavior of the networks so as the respective clients are made aware, through the delivery of specific mail reports [235], of the overall activity on their networks and can take corrective actions if there is such a need to do so. For example make a timely decision on when to add a server if a network constantly bears too much traffic. Obviously, this latter type of monitor machine can be as well a physically different working station or just another virtual machine of a multitask operating system like UNIX operated by the same operators in the same environment.

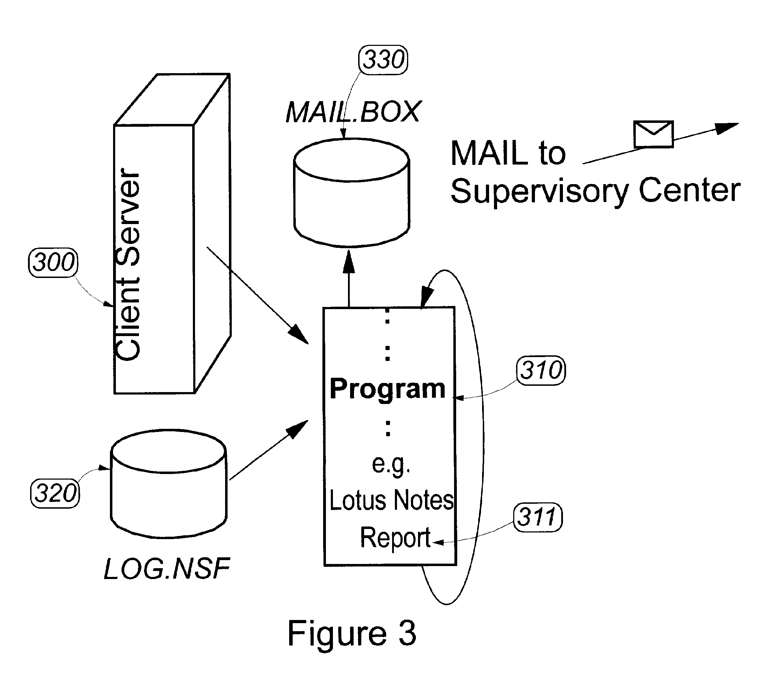

**Figure 3** shows how the client server [300] is organized to carry out the scheme of the invention. Server is assumed to run a groupware software program [310] such as Lotus Notes, already mentioned, and more specifically a 'report task' [311] available in this type of software. In which case all has been collected by the server on the client network activity and stored in a local data base 'LOG.NSF' [320] is further analyzed by the 'report task' of the groupware program and a report formatted. This report is assembled in a specific data base 'MAIL.BOX' [330] before it is sent under the form of one or more mail messages, at next scheduled time, to the supervisory center. Also, outstanding events and alarms, detected by the client server [300] may be reported in the same way, any time, if a permanent connection to the supervisory center exists or if the connection can be established on request. The protocol used for the mail messages is not relevant of the invention. Any protocol and product, other than Lotus Notes here above mentioned, could be used as well such as those based on the well known Simple Network Management Protocol (SNMP) of the Internet suite of protocols.

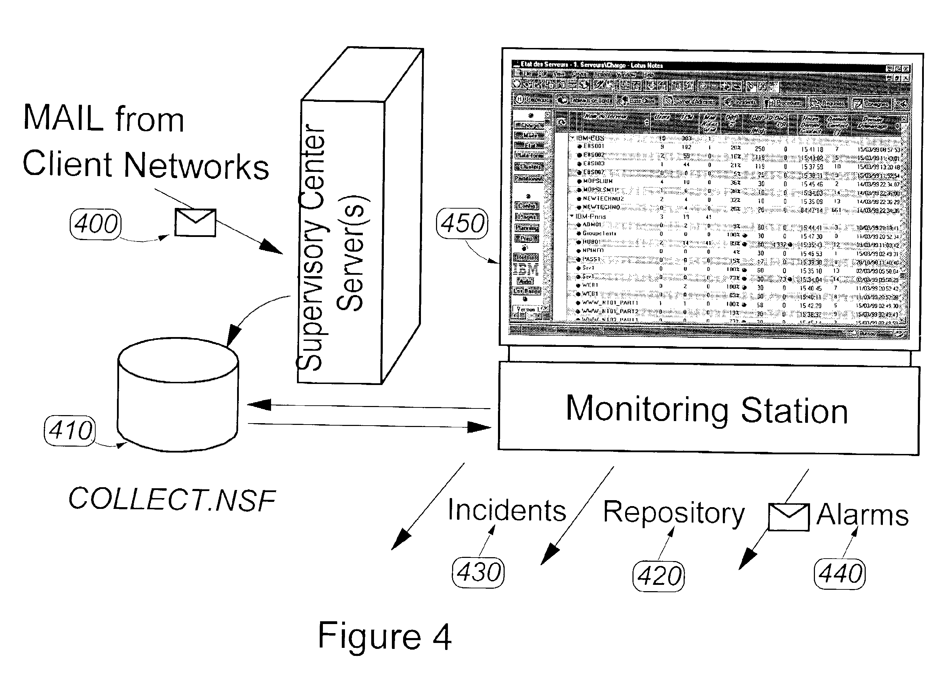

**Figure 4** gives more details on how the monitoring station and the supervisory center are organized. All the mail messages [400] arriving from the client networks and carrying the scheduled and outstanding (unscheduled) reports are collected and stored in a data base 'collect.nsf' [410] on the storage facility previously described in figure 2 [270] and further processed so as they are eventually logged into the 'repository' data base [420] or into the 'incidents' data base [430] that were previously discussed. Moreover, the reporting of alarms or the local discovery of anomalies as a result of a deeper analysis of the collected events may trigger the sending of alerts [440], under the form of mail messages, to specific accounts on the remote client networks impacted. All of this is conveniently displayed [450] on the monitor station and is discussed in the next figure. Furthermore, as mentioned earlier, what is displayed from the monitoring station can be seen as well from other stations part of the supervisory center and even from outside, through the Internet. Obviously, in this latter case, data access is controlled and restricted to those that are authorized in order they may consult their own data or the subset of data they are permitted to browse.

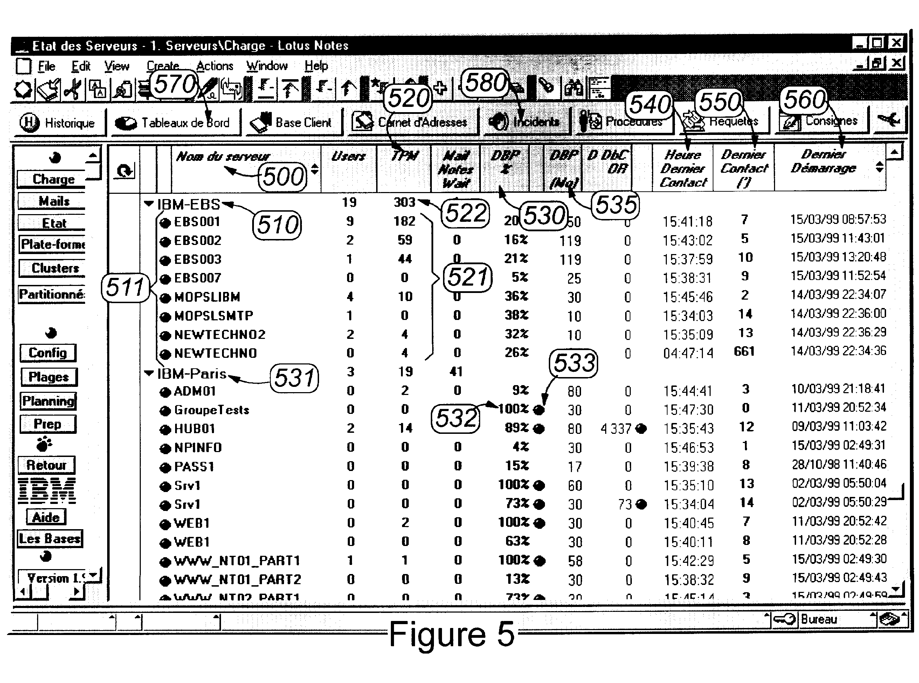

**Figure 5** is just an example (one view out of many) of how the information collected from the client networks, reflecting how well they operate, is displayed in order that an operator can easily watch it and take appropriate actions when needed. In the server name column *('Nom du serveur')* [500] appears the client networks serviced from the supervisory center. For instance, IBM-EBS [510], comprising 8 servers [511]. Among many other things, the number of observed transactions per minutes ('**TPM**') are listed in column [520] for each server [521] and for the whole client network [522]. In column [530] the data base buffer pool ('**DBP**') is reflecting how much, of the available storage allocated to the servers, is currently in use. This latter parameter is shown in next column [535] and displayed in MegaOctets (`*(Mo)*'). As an example, it is then perfectly clear that some of the servers of client network 'IBM-Paris' [531] have exhausted their storage allocation as shown in [532], switching on button [533], to better draw the attention of the operator on a potential problem if this situation persists. Column [540] (*'Heure Dernier Contact'*) displays the time at which the latest mail was received from the servers of the client network thus, reflecting when the here above information was last updated, and column [550] the time, in minutes, that has elapsed since. As far as column [560] (*'Dernier Démarrage'*) is concerned it indicates when, for the last time, the servers were restarted. Many other views of the collected data are available and can be reached for example by clicking on [570] (*'Tableaux de Bord'*) which displays the longer term (dashboard) summary reports on the client networks as already discussed in figure 2 or on [580] to get the details about the incidents that were logged for each client network.

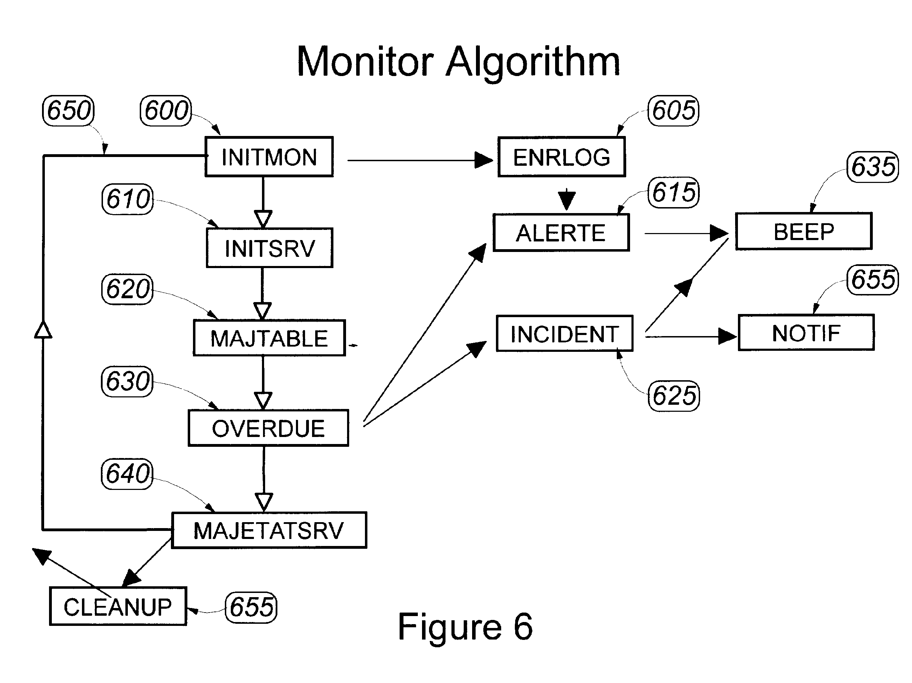

**Figure 6** illustrates the monitoring algorithm with its main steps. The first one or 'INITMON' [600] initializes all the links with the set of data bases previously discussed. Also, it sets all the necessary variables for the algorithm to operate properly. The second step [610] collects all the configuration data from the data bases such as the server names that supervisory center is due to control, the expected time interval between the reception of two regular mail messages, the name and coordinates of those in charge of the client networks so that alerts [615] may be forwarded to them, and so on. From this step internal tables are created reflecting the particularities of each client network. The following step [620] 'MAJTABLE' is essential since, after initialization has been carried out, it retrieves the incoming mail messages from the collect database [410] discussed in figure 4 so as to update the here above internal tables thus, reflecting the current status of the client networks. After which, a next step [630] 'OVERDUE' takes care of those of the client networks from which no mail message has been received for an outstanding period of time which may end up in a 'Contact Loss' state triggering an alert towards the client network manager. The step [640] 'MAJETATSRV' performs housekeeping of the internal data bases and creates, for instance, specific Lotus Notes data bases that are view able from all the Lotus Notes stations connected on the supervisory center or accessible from outside in part, or in totality, depending on the level of authorization those accessing are granted. Obviously, the same level of functionality may be obtained with any other groupware type of software that would have characteristics equivalent to Lotus Notes, used as an example, in the particular implementation of the invention. Out of the main loop [650] whose steps have just been discussed, other tasks need to be effected such as 'ENRLOG' [605] which keeps track, into a log data file, of the monitoring activity. 'ALERTE' [615], already mentioned, is in charge of forwarding alert messages to the administrators of the client networks and triggers the generation of any convenient visual or audible alarm 'BEEP' [635] to draw the attention of the operators. 'INCIDENT' task [625] is in charge of creating records in the corresponding data base shown in figure 2 [272], for the incidents that have been detected. This may also enable the alarm [635] while the administrators of the client networks are notified [645] of the recording of such incidents. Finally, the 'CLEANUP' task [655] is in charge, in case of error, of restarting the main loop [660].

## Claims

1. A method for gathering performance data in a centralized supervisory center comprising storing, computing and communicating resources, from a plurality of independent client networks each comprising at least one server capable of sending mail messages through a common communications network on which said centralized supervisory center and said client networks are connected, said method comprising the steps of:
in said servers of said client networks;
collecting, over a fixed period of time, said performance data indicative of the operational behavior of said client networks;
preprocessing said performance data while they are collected;
formatting, at completion of said fixed period of time, said preprocessed performance data under the form of a common format report understandable by said supervisory center;
forwarding, in at least one mail message, through said common communications network, said report to said supervisory center;
in said supervisory center;
receiving said mail messages;
storing said mail messages, for further processing, on the storage resources of said supervisory center;
repeating all herein above steps while said supervisory center and at least one of said client networks are operational.

2. The method of claim 1 wherein said report is formatted any time, within said fixed period of time, if said preprocessed collected performance data are reflecting that an outstanding event has been detected in said client network.

3. The method of any one of claims 1 or 2 wherein some of said client networks are permanently connected to said common communications network while others, among said client networks, connect intermittently, allowing any arrangement of permanently or intermittently connected client networks.

4. The method of any one of the preceding claims wherein a connection to said common communications network from said client network is established whenever a report has been formatted so that said report is forwarded towards said supervisory center when ready.

5. The method of any one of the preceding claims wherein said common communications network is a private network or a public network or a combination of.

6. The method of any one of the preceding claims for further processing and displaying, in said centralized supervisory center said performance data gathered from said plurality of independent client networks, said method further comprising the steps of:
extracting said performance data from said common format reports received from said client networks;
flagging those of said client networks failing to send said common format reports;
creating data bases from said performance data, including:
a repository data base of all regular performance data;
a data base of all incidents and outstanding events reported from said client networks also logging those of said client networks that fail sending said common format reports in due time;
analyzing said data bases content;
displaying views of said data bases.

7. The method of claim 6 wherein said views of said data bases are remotely view able from any station over said supervisory center or from outside said supervisory center through said common communications network provided permission is granted by said supervisory center.

8. The method of any one of preceding claims further including the step of:
notifying administrators of said client networks, sending them alert mail messages, whenever anomalies are detected as a result of further analyzing, within said supervisory center, content of said data bases.

9. The method of any one of preceding claims further including the steps of:
generating periodically history and activity reports; sending said history and activity reports to said administrators of said client networks.

10. A system for supervising a plurality of client networks comprising means adapted for carrying out the steps of the methods according to any one of the previous claims.
